(19)

Europäisches
Patentamt
European
Patent Office
Office européen
des brevets

(11) **EP 4 276 945 A1**

(12) **EUROPEAN PATENT APPLICATION**
published in accordance with Art. 153(4) EPC

(43) Date of publication:
**15.11.2023 Bulletin 2023/46**

(21) Application number: **22902462.5**

(22) Date of filing: **18.03.2022**

(51) International Patent Classification (IPC):
**H01M 4/36** (2006.01)     **H01M 4/525** (2010.01)

(52) Cooperative Patent Classification (CPC):
**H01M 4/36; H01M 4/525**

(86) International application number:
**PCT/CN2022/081676**

(87) International publication number:
**WO 2023/173403 (21.09.2023 Gazette 2023/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
• **SHEN, Chongheng**
**Ningde City**
**Fujian 352100 (CN)**

• **WU, Qi**
**Ningde City**
**Fujian 352100 (CN)**
• **HUAN, Shuxing**
**Ningde City**
**Fujian 352100 (CN)**
• **LUO, Dongsheng**
**Ningde City**
**Fujian 352100 (CN)**
• **LIU, Na**
**Ningde City**
**Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **HIGH-NICKEL TERNARY POSITIVE ELECTRODE MATERIAL AND PREPARATION METHOD THEREFOR, SECONDARY BATTERY, BATTERY MODULE, BATTERY PACK, AND ELECTRICAL DEVICE**

(57) The present application relates to a high-nickel ternary positive electrode material, including a matrix $Li_{1+x}Ni_aCo_bMg_cY_dM_{(1-a-b-c-d)}O_{2\pm y}$, wherein M is selected from at least one of Mn, Zr, Al, B, Ta, Mo, W, Nb, Sb, and La, wherein: $0.8 \leq a < 1.0$, $0 < b < 0.2$, $0 < c \leq 0.005$, $0 < d \leq 0.01$, $a + b + c + d < 1$, $-0.5 < x < 0.5$, $0 \leq y < 0.02$, a surface of the matrix is provided with a cladding layer, and the cladding layer contains a boron-containing alloy. The present application further relates to a method for preparing a high-nickel ternary positive electrode material, as well as a secondary battery , a battery module , a battery pack and an electrical apparatus.

Fig. 2

EP 4 276 945 A1

**Description**

**TECHNICAL FIELD**

The present application relates to the technical field of lithium-ion batteries, and in particular to a high-nickel ternary positive electrode material and a preparation method, a secondary battery, a battery module, a battery pack and an electrical apparatus thereof.

**BACKGROUND ART**

In recent years, as the application range of lithium-ion secondary batteries is becoming more and more wide, the lithium-ion secondary batteries have been widely applied in hydropower, firepower, wind power and solar power stations, and the like energy storage power supply systems, as well as in many fields of electric tools, electric bicycles, electric motorcycles, electric vehicles, military equipment, aerospace and the like.

Due to the great development of the lithium-ion secondary batteries, higher requirements have also been put forward for their energy density, cycling performance and safety performance, etc. However, a high-nickel positive electrode active material is considered to be the best choice to meet the requirement of high energy density. However, with the continuous increase of nickel content, its structural stability is getting worse, which in turn affects the cycling performance and storage performance of the lithium-ion secondary batteries.

Therefore, there is a need to improve the cycling performance and storage performance of the lithium-ion secondary batteries.

**SUMMARY OF THE INVENTION**

The present application is made in view of the aforementioned problems, and its objective is to provide a high-nickel ternary positive electrode material, aiming to make a lithium-ion secondary battery prepared therefrom have good cycling performance and storage stability at high temperature.

In order to achieve the aforementioned objective, the present application provides a high-nickel ternary positive electrode material and a preparation method, a secondary battery, a battery module, a battery pack and an electrical apparatus thereof.

A first aspect of the present application provides a high-nickel ternary positive electrode material, including a matrix $Li_{1+x}Ni_aCo_bMg_cY_dM_{(1-a-b-c-d)}O_{2\pm y}$, wherein M is selected from at least one of Mn, Zr, Al, B, Ta, Mo, W, Nb, Sb, and La, wherein: $0.8 \leq a < 1.0$, $0 < b < 0.2$, $0 < c \leq 0.005$, $0 < d \leq 0.01$, $a + b + c + d < 1$, $-0.5 < x < 0.5$, $0 \leq y < 0.02$, a surface of the matrix is provided with a cladding layer, and the cladding layer contains a boron-containing alloy.

Therefore, in the present application, the Y element and the Mg element are uniformly distributed in outer particles of the material powder, the Y element helps to form outer radial rod-shaped particles and thus helps to improve the isotropy of stress change, and the Mg element helps to mitigate the severity of H2-H3 phase transition, suppress the drastic change in unit cell volume during deep charge and discharge, thereby inhibiting the expansion of intragranular and intergranular cracks; meanwhile, the boron-containing alloy covered at the grain boundary can not only absorb the stress fatigue accumulated at the grain boundary, but also protect an active surface from corrosion by an electrolyte solution by-product, thereby improving the cycling performance and storage stability of the secondary battery at high temperature.

In any of embodiments, the boron-containing alloy is $M'B_z$, wherein M' is selected from at least one of Co, Ti, Zr, W, Al and Mo, and $0 < z \leq 4$. When the z of the boron-containing alloy is within the given range, it helps to improve the electronic conductivity of the cladded high-nickel ternary positive electrode material, thereby further improving the rate performance of the high-nickel ternary positive electrode material.

In any of embodiments, $0 < c \leq 0.003$. When the c is within the given range, it helps to improve the structural stability of the high-nickel ternary positive electrode material under drastic changes in unit cell volume, without affecting the gram capacity too much.

In any of embodiments, $0 < d \leq 0.005$. When the d is within the given range, it helps to improve the degree of order in particle arrangement and radial distribution of the high-nickel ternary positive electrode material and suppress intragranular cracks, without causing excessive side reactions due to excessive specific surface areas of surface particles.

In any of embodiments, the cladding content of the boron-containing alloy is 1,000 ppm-15,000 ppm, based on the total weight of the metal elements in the boron-containing alloy relative to the matrix. When the cladding content of the boron-containing alloy is within the given range, the strength of the grain boundary can be improved to the greatest extent without causing a decrease in capacity due to clogged pores.

In any of embodiments, the high-nickel ternary positive electrode material has a particle diameter $Dv_{50}$ of 3 $\mu$m-18 $\mu$m, and optionally 9 $\mu$m-14 $\mu$m, and a volume distribution span $(Dv_{90} - Dv_{10})/Dv_{50} \geq 1.30$. When the volume distribution span of the high-nickel ternary positive electrode material is within the given range, the compaction density of the sintered high-nickel ternary positive electrode material can be increased, thereby further increasing the volumetric energy density of the ternary positive electrode material.

In any of embodiments, the BET of the high-nickel ternary positive electrode material is 0.2 $m^2$/g-1 $m^2$/g, and optionally 0.3 $m^2$/g-0.7 $m^2$/g. When the BET of the high-nickel ternary positive electrode material is within the given range, the corrosion by the electrolyte solution can be reduced, thereby improving the storage performance of the secondary battery.

In any of embodiments, the tap density TD of the high-nickel ternary positive electrode material is 1.8 $g/cm^3$-2.5 $g/cm^3$, and optionally 1.9 $g/cm^3$-2.3 $g/cm^3$. When the tap density TD of the high-nickel ternary positive electrode material is within a given range, the processability of the high-nickel ternary positive electrode material can be improved.

A second aspect of the present application further provides a method for preparing a high-nickel ternary positive electrode material, including the following steps:

> S1: preparing a mixed metal salt solution of Ni, Co and M, as well as a magnesium salt solution and an yttrium salt solution;
> S2: adding water into a reaction kettle as a base liquid, adding an alkali solution and ammonia water to adjust the pH value and ammonia concentration of the base liquid, adding the mixed metal salt solution of Ni, Co and M, the alkali solution and ammonia water into the reaction kettle, keeping the pH value and ammonia concentration be constant and feeding an inert gas for protection, so as to obtain a high-nickel ternary precursor, stopping the addition of the mixed metal salt solution of Ni, Co and M, adding the magnesium salt solution, the yttrium salt solution, the alkali solution, and ammonia water into the reaction kettle, and keeping the pH value and ammonia concentration be constant, so as to obtain a high-nickel ternary precursor doped with the Mg and Y elements on the surface;
> S3: mixing and sintering a lithium-containing compound and the high-nickel ternary precursor doped with the Mg and Y elements on the surface to obtain a matrix of high-nickel ternary positive electrode material; and
> S4: mixing the matrix of high-nickel ternary positive electrode material with a boron-containing alloy in an inert atmosphere or air, and then sintering in an inert atmosphere or $O_2$ to obtain the high-nickel ternary positive electrode material.

The high-nickel ternary positive electrode material includes

a matrix $Li_{1+x}Ni_aCo_bMg_cY_dM_{(1-a-b-c-d)}O_{2\pm y}$, wherein M is selected from at least one of Mn, Zr, Al, B, Ta, Mo, W, Nb, Sb, and La, wherein: $0.8 \le a < 1.0$, $0 < b < 0.2$, $0 < c \le 0.005$, $0 < d \le 0.01$, $a + b + c + d < 1$, $-0.5 < x < 0.5$, $0 \le y < 0.02$, a surface of the matrix is provided with a cladding layer, and the cladding layer contains a boron-containing alloy.

Thus, a high-nickel ternary positive electrode material having a radial distribution structure of the precursor and outer particles rich in the Y and Mg elements can be obtained by doping at a precursor level through the method of the present application. There are two processes of nucleation and nucleus growth in step S2 of the method of the present application, which can synthesize a radially distributed shell structure on the nucleus, and can significantly improve the long-term performance of the sintered high-nickel ternary positive electrode material. Moreover, the method of the present application is divided into two schemes in step S4: sintering in a low-temperature inert atmosphere and sintering in a high-temperature oxygen atmosphere. The former can maximize the advantages of the boron-containing alloy, and the latter can realize the reaction between the alloy and residual lithium and stabilize lattice oxygen on the surface.

In any of embodiments, in step S4, the inert atmosphere is nitrogen ($N_2$) or argon (Ar) with a purity of 99.9% or higher.

In any of embodiments, in step S4, the sintering temperature is 300°C-650°C.

In any of embodiments, in step S4, the sintering time is 3 h-10 h.

In any of embodiments, in step S4, the particle size of the boron-containing alloy is 50 nm-3,200 nm.

A third aspect of the present application provides a secondary battery, which comprises the high-nickel ternary positive electrode material of the first aspect of the present application or the high-nickel ternary positive electrode material prepared according to the method of the second aspect of the present application.

A fourth aspect of the present application provides a battery module comprising the secondary battery of the third aspect of the present application.

A fifth aspect of the present application provides a battery pack comprising the battery module of the fourth aspect of the present application.

A sixth aspect of the present application provides an electrical apparatus comprising at least one selected from the secondary battery of the third aspect of the present application, the battery module of the fourth aspect of the present application, or the battery pack of the fifth aspect of the present application.

The battery module, battery pack, and electrical apparatus of the present application includes the secondary battery of the present application, and thus have at least the same advantages as those of the secondary battery.

## DESCRIPTION OF DRAWINGS

Fig. 1 is a schematic view of a secondary battery according to an embodiment of the present application.
Fig. 2 is an exploded view of the secondary battery according to an embodiment of the present application shown in Fig. 1.
Fig. 3 is a schematic diagram of a battery module according to an embodiment of the present application.
Fig. 4 is a schematic view of a battery pack according to an embodiment of the present application.
Fig. 5 is an exploded view of the battery pack according to an embodiment of the present application shown in Fig. 4.
Fig. 6 is a schematic view of an electrical apparatus in which a secondary battery is used as a power source according to an embodiment of the present application.

Description of reference numerals:

1 battery pack; 2 upper box body; 3 lower box body; 4 battery module; 5 secondary battery; 51 case; 52 electrode assembly; 53 top cover assembly

## DETAILED DESCRIPTION

Hereinafter, embodiments that specifically disclose a high-nickel ternary positive electrode material and a preparation method, a secondary battery, a battery module, a battery pack and an electrical apparatus thereof of the present application will be described in detail with reference to the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, wherein both a and b are real numbers. For example, the numerical range "0-5" means that all real numbers between "0-5" have been listed herein, and "0-5" is just an abbreviated representation of the combination of these numerical values. Additionally, when it is stated that a certain parameter is an integer of $\geq 2$, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

If not specifically stated, "including" and "comprising" mentioned in the present application indicate open inclusion or closed inclusion. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

[high-nickel ternary positive electrode material]

In one embodiment of the present application, the present application proposes a high-nickel ternary positive electrode material, including

a matrix $Li_{1+x}Ni_aCo_bMg_cY_dM_{(1-a-b-c-d)}O_{2\pm y}$, wherein M is selected from at least one of Mn, Zr, Al, B, Ta, Mo, W, Nb, Sb, and La, wherein, $0.8 \leq a < 1.0$, $0 < b < 0.2$, $0 < c \leq 0.005$, $0 < d \leq 0.01$, $a + b + c + d < 1$, $-0.5 < x < 0.5$, $0 \leq y < 0.02$, a surface of the matrix is provided with a cladding layer, and the cladding layer contains a boron-containing alloy.

Although the mechanism is not yet clear, the applicant has unexpectedly found that: in the present application, the Y element and the Mg element are uniformly distributed in the outer particles of the material powder, and the enrichment of the Y element in the outer particles can be deposited onto a crystal plane perpendicular to (001), resulting in the growth of the (001) crystal plane and making the outer particles evolve into an elongated rod with a large aspect ratio along the radial direction, which significantly improves the degree of order in stacking and isotropy and reduces the deformation stacking fault rate, is conducive to the synchronization in frequency of grain volume changes during the cycling, reduces the stress interaction among particles, and inhibits the expansion of intergranular cracks; the Mg element can provide a supporting column role in the process of deintercalating a large amount of lithium from the high-nickel ternary positive electrode material, inhibit the drastic change of the unit cell volume, reduce the degree of H2-H3 phase transition, and inhibit the stress-strain effect, thereby inhibiting the expansion of the intragranular cracks; and meanwhile, the boron-containing alloy covered at the grain boundary can well absorb the stress concentration at the grain boundary during the process of charge and discharge and improve the toughness strength of the grain boundary, and can also protect a surface of an active material from corrosion by an electrolyte solution by-product and inhibit the occurrence of side reactions on a surface of a highly active material. Therefore, the strengthening and uniform cladding of the grain boundary can significantly improve the high temperature cycling performance and structural stability of the high-nickel ternary positive electrode material, thereby improving the cycling performance and storage stability of the secondary battery at a high temperature and during charge and discharge.

In some embodiment, the boron-containing alloy is $M'B_z$, wherein M' is selected from at least one of Co, Ti, Zr, W, Al and Mo, and $0 < z \leq 4$. When the z of the boron-containing alloy is within the given range, it helps to improve the electronic conductivity of the cladded high-nickel ternary positive electrode material, thereby further improving the rate performance of the high-nickel ternary positive electrode material.

In some embodiments, $0 < c \leq 0.003$, for example $0.0005 \leq c \leq 0.003$, $0.001 \leq c \leq 0.003$, and $0.0005 \leq c \leq 0.001$. When the c is within the given range, it helps to improve the structural stability of the high-nickel ternary positive electrode material under drastic changes in unit cell volume, without affecting the gram capacity too much.

In some embodiments, $0 < d \leq 0.005$, for example $0.001 \leq d \leq 0.005$, and $0.002 \leq d \leq 0.005$. When the d is within the given range, it helps to improve the degree of order in particle arrangement and radial distribution of the high-nickel ternary positive electrode material and suppress intragranular cracks, without causing excessive side reactions due to excessive specific surface areas of surface particles.

In some embodiment, the cladding content of the boron-containing alloy is 1,000 ppm-15,000 ppm, based on the total weight of the metal elements in the boron-containing alloy relative to the matrix. When the cladding content of the boron-containing alloy is within the given range, the strength of the grain boundary can be improved to the greatest extent without causing a decrease in capacity due to clogged pores.

In some embodiment, the high-nickel ternary positive electrode material has a particle diameter $Dv_{50}$ of 3 $\mu$m-18 $\mu$m, and optionally 9 $\mu$m-14 $\mu$m, and a volume distribution span $(Dv_{90} - Dv_{10})/Dv_{50} \geq 1.30$. When the volume distribution span of the high-nickel ternary positive electrode material is within the given range, the compaction density of the sintered high-nickel ternary positive electrode material can be increased, thereby further increasing the volumetric energy density of the high-nickel ternary positive electrode material.

In the present application, the particle volume distribution particle diameters $Dv_{10}$, $Dv_{50}$, and $Dv_{90}$ of the high-nickel ternary positive electrode material are well-known concepts in the art. Specifically, $Dv_{10}$ is a particle diameter reaching 10% of the cumulative volume from the small particle diameter side in the volume-based particle diameter distribution of powder particles, and the unit is usually $\mu$m. $Dv_{50}$ is a particle diameter reaching 50% of the cumulative volume from the small particle diameter side in the volume-based particle diameter distribution of powder particles. $Dv_{90}$ is a particle diameter reaching 90% of the cumulative volume from the small particle diameter side in the volume-based particle diameter distribution of powder particles. The particle volume distribution particle diameters $Dv_{10}$, $Dv_{50}$, and $Dv_{90}$ of the aforementioned ternary precursors can be tested by a testing method well known in the art. As an example, they can be determined with reference to GB/T 19077-2016/ISO 13320:2009 particle size distribution laser diffraction method and using the device Malvern 3000.

In some embodiment, the BET of the high-nickel ternary positive electrode material is 0.2 $m^2$/g-1 $m^2$/g, and optionally 0.3 $m^2$/g-0.7 $m^2$/g. When the BET of the high-nickel ternary positive electrode material is within the given range, the corrosion by the electrolyte solution can be reduced, thereby improving the storage performance of the secondary battery.

In the present application, the specific surface area BET of the high-nickel ternary positive electrode material can be tested by a testing method well known in the art. As an example, it can be determined with reference to GB/T 19587-2017 "Determination of the specific surface area of solids by gas adsorption using the BET method", and using the device TriStar II 3020.

In some embodiment, the tap density TD of the high-nickel ternary positive electrode material is 1.8 g/cm$^3$-2.5 g/cm$^3$, and optionally 1.9 g/cm$^3$-2.3 g/cm$^3$. When the tap density TD of the high-nickel ternary positive electrode material is within a given range, the processability of the high-nickel ternary positive electrode material can be improved.

In the present application, the tap density TD of the high-nickel ternary positive electrode material can be tested by a testing method well known in the art. As an example, it can be determined with reference to GB/T 5162-2006 "Metallic powders-Determination of tap density" and using the device Dandong Bettersize model BT-300 tap density meter.

In the present application, in the high-nickel ternary positive electrode material, the enrichment of the Y element on the surface of the outer particles of the powder leads to its evolution along the radial direction, which increases the aspect ratio of the outer primary particles, and the aspect ratio of the primary particles is 3-9.

In one embodiment of the present application, the present application proposes a method for preparing a high-nickel ternary positive electrode material, including the following steps:

S1: preparing a mixed metal salt solution of Ni, Co and M, as well as a magnesium salt solution and an yttrium salt solution;

S2: adding water into a reaction kettle as a base liquid, adding an alkali solution and ammonia water to adjust the pH value and ammonia concentration of the base liquid, adding the mixed metal salt solution of Ni, Co and M, the alkali solution and ammonia water into the reaction kettle, keeping the pH value and ammonia concentration be constant and feeding an inert gas for protection, so as to obtain a high-nickel ternary precursor, stopping the addition of the mixed metal salt solution of Ni, Co and M, adding the magnesium salt solution, the yttrium salt solution, the alkali solution, and ammonia water into the reaction kettle, and keeping the pH value and ammonia concentration be constant, so as to obtain a high-nickel ternary precursor doped with the Mg and Y elements on the surface;

S3: mixing and sintering a lithium-containing compound and the high-nickel ternary precursor doped with the Mg and Y elements on the surface to obtain a matrix of high-nickel ternary positive electrode material; and

S4: mixing the matrix of high-nickel ternary positive electrode material with a boron-containing alloy in an inert atmosphere or air, and then sintering in an inert atmosphere or $O_2$ to obtain the high-nickel ternary positive electrode material.

The high-nickel ternary positive electrode material includes a matrix $Li_{1+x}Ni_aCo_bMg_cY_dM_{(1-a-b-c-d)}O_{2\pm y}$, wherein M is selected from at least one of Mn, Zr, Al, B, Ta, Mo, W, Nb, Sb, and La, wherein: $0.8 \leq a < 1.0$, $0 < b < 0.2$, $0 < c \leq 0.005$, $0 < d \leq 0.01$, $a + b + c + d < 1$, $-0.5 < x < 0.5$, $0 \leq y < 0.02$, a surface of the matrix is provided with a cladding layer, and the cladding layer contains a boron-containing alloy.

Therefore, in the method of the present application, by doping at the precursor level, migrating to the Li layer due to the ionic radius of the heteroatoms and the like during sintering and thus failing to achieve the role of the supporting column of the TM layer can be avoided; and a high-nickel ternary positive electrode material having a radial distribution structure of the precursor and outer particles rich in the Y and Mg elements can be obtained. There are two processes of nucleation and nucleus growth in step S2 of the method of the present application, which can synthesize a radially distributed shell structure on the nucleus, and can significantly improve the long-term performance of the sintered high-nickel ternary positive electrode material. Moreover, the method of the present application is divided into two schemes in step S4: sintering in a low-temperature inert atmosphere and sintering in a high-temperature oxygen atmosphere. The former can form a uniform cladding layer of boron-containing alloy to further strengthen the toughness of the grain boundary, and the latter can realize the reaction between the alloy and residual lithium and stabilize lattice oxygen on the surface.

In the embodiment of the present application, in step S1, a nickel salt, a cobalt salt, a M-containing compound and pure water are used for preparing the mixed metal salt solution of Ni, Co and M. The present application has no especially limitation on the type of the nickel salt, the cobalt salt and the M-containing compound, and it can be selected according to actual requirements. For example, the nickel salt includes one or more of nickel sulfate, nickel nitrate, and nickel acetate; the cobalt salt includes one or more of cobalt sulfate, cobalt oxalate, cobalt nitrate, and cobalt acetate; when M is manganese, the manganese-containing compound includes one or more of manganese sulfate, manganese nitrate, and manganese acetate; when M is zirconium, the zirconium-containing compound includes one or more of zirconium dioxide, lithium zirconate, and zirconium chloride; when M is aluminum, the aluminum-containing compound includes one or more of aluminum oxide, aluminum hydroxide, and lithium aluminate; when M is boron, the boron-containing compound includes one or more of boron oxide, boric acid, lithium borate, zirconium boride and tungsten boride; when M is tantalum, the tantalum-containing compound includes one or more of tantalum pentoxide, tantalum hydroxide, lithium tantalate, tantalum chloride, and tantalum fluoride; when M is molybdenum, the molybdenum-containing compound includes one or more of molybdenum dioxide, molybdenum trioxide, sodium molybdate, lithium molybdate, molybdate anhydride, and molybdenum chloride; when M is tungsten, the tungsten-containing compound includes one or more of tungsten trioxide, sodium tungstate, lithium tungstate, and ammonium tungstate; when M is niobium, the niobium-containing compound includes one or more of niobium pentoxide, niobium trioxide, niobium fluoride, niobium chloride and lithium niobate; when M is antimony, the antimony-containing compound includes one or more of antimony trioxide, antimony pentoxide, and lithium fluoroantimonate; and when M is lanthanum, the lanthanum-containing compound includes one or more of lanthanum trioxide, lanthanum chloride, and lanthanum lithium zirconate.

In some embodiments, in step S 1, the concentration of the mixed metal salt solution of Ni, Co and M is 1-5 mol/L.

In the embodiments of the present application, in step S 1, it has no specific limitation on the types of the yttrium salt and the magnesium salt, and they can be selected according to actual requirements. For example, the yttrium salt includes one or more of yttrium sulfate, yttrium nitrate, yttrium oxalate, yttrium acetate, and yttrium chloride. The magnesium salt includes one or more of magnesium sulfate, magnesium nitrate, magnesium oxalate, magnesium acetate, and magnesium chloride.

In some embodiments, in step S1, the concentrations of the yttrium salt solution and the magnesium salt solution are 1-5 mol/L.

In some embodiments, in step S2, the alkali solution is, for example, a sodium hydroxide solution with a concentration of 1-10 mol/L; the pH value is 9.5-10.5; the concentration of the ammonia water solution is 1-5 mol/L; the concentration of ammonia is 0.5-1 mol/L, and optionally 0.65-0.75 mol/L; the reaction temperature is 65-85°C; and the stirring rate is 150 rpm-350 rpm.

In some embodiments, in step S2, the inert gas includes high-purity (> 99.9%) nitrogen and argon.

By controlling the process conditions in step S2, a high-nickel ternary precursor with an average volume distribution particle diameter $Dv_{50}$ of 3 $\mu$m-18 $\mu$m can be continuously and stably obtained. By controlling the ammonia concentration and reaction temperature, it is beneficial to form a crystal structure of high-nickel ternary precursor with good primary grain stacking and a low stacking fault rate. By controlling the stirring rate, a high-nickel ternary precursor with dense particles and uniform porosity can be synthesized while avoiding breakage of large particles.

In the embodiments of the present application, in step S3, it has no specific limitation on the type of the lithium-containing compound, and it can be selected according to actual requirements. For example, the lithium-containing compound may be lithium hydroxide, lithium carbonate, lithium nitrate.

In some embodiments, in step S3, the molar ratio of lithium in the lithium-containing compound to the sum of nickel, cobalt, and M in the ternary precursor is (0.9-1.1): 1.

In some embodiments, in step S3, the sintering temperature is 700-900°C; the sintering time is 10 h-20 h; and the sintering atmosphere is air or oxygen.

In some embodiments, in step S4, the inert atmosphere is nitrogen ($N_2$) or argon (Ar) with a purity of 99.9% or higher.

In some embodiments, in step S4, the sintering temperature is 300°C-650°C.

In some embodiments, in step S4, the sintering time is 3 h-10 h.

In some embodiments, in step S4, the particle size of the boron-containing alloy is 50 nm-3,200 nm.

Moreover, the secondary battery, battery module, battery pack and an electrical apparatus of the present application will be described hereafter with appropriate reference to the accompanying drawings.

In an embodiment of the present application, a secondary battery is provided.

Generally, the secondary battery pack includes a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode while allowing ions to pass through.

[positive electrode plate]

The positive electrode plate includes a positive electrode current collector and a positive electrode film layer arranged on at least one surface of the positive electrode current collector, and the positive electrode film layer includes the high-nickel ternary positive electrode material of the first aspect of the present application.

As an example, the positive electrode current collector has two opposite surfaces in its own thickness direction, and the positive electrode film layer is arranged on either or both of the opposite surfaces of the positive electrode current collector.

In some embodiments, the positive electrode current collector can be a metal foil or a composite current collector. For example, an aluminum foil can be used as the metal foil. The composite current collector may include a high molecular material base layer and a metal layer formed on at least one surface of the high molecular material base layer. The composite current collector can be formed by forming a metal material (aluminum, aluminum alloy, nickel, nickel alloy, titanium, titanium alloy, silver and silver alloy, etc.) on the high molecular material base layer (e.g., polypropylene (PP), polyethylene terephthalate (PET), polybutylene terephthalate (PBT), polystyrene (PS), polyethylene (PE), etc.).

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotubes, graphene, and carbon nanofibers.

In some embodiments, the positive electrode plate can be prepared by: dispersing the aforementioned components for preparing the positive electrode plate, e.g., the positive electrode active material, the conductive agent, the binder and any other components in a solvent (e.g., N-methyl pyrrolidone) to form a positive electrode slurry; and coating the positive electrode slurry on a positive electrode current collector, followed by oven drying, cold pressing and the like procedures, to obtain the positive electrode plate.

[Negative electrode plate]

The negative electrode plate includes a negative-electrode current collector and a negative electrode film layer arranged on at least one surface of the negative electrode current collector, wherein the negative electrode film layer includes a negative electrode active material.

As an example, the negative electrode current collector has two opposite surfaces in its own thickness direction, and the negative electrode film layer is arranged on either or both of the opposite surfaces of the negative electrode current collector.

In some embodiments, the negative electrode current collector can be a metal foil or a composite current collector. For example, a copper foil can be used as the metal foil. The composite current collector may include a high molecular material base layer and a metal layer formed on at least one surface of the high molecular material base layer. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), polyethylene (PE), and the like).

In some embodiments, the negative electrode active material may be a negative electrode active material for batteries well known in the art. As an example, the negative electrode active material may include at least one of artificial graphite, natural graphite, soft carbon, hard carbon, a silicon-based material, a tin-based material, lithium titanate, and the like. The silicon-based material can be at least one selected from elemental silicon, a silicon oxide compound, a silicon-carbon composite, a silicon-nitrogen composite, and a silicon alloy. The tin-based material may be at least one selected from elemental tin, a tin oxide compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally include other adjuvants, for example, a thickener (e.g., sodium carboxymethylcellulose (CMC-Na)) and the like.

In some embodiments, the negative electrode plate can be prepared by: dispersing the aforementioned components for preparing the negative electrode plate, e.g., the negative electrode active material, the conductive agent, the binder and any other components in a solvent (e.g. deionized water) to form a negative electrode slurry; and coating the negative electrode slurry on a negative current collector, followed by oven drying, cold pressing and the like procedures, to obtain the negative electrode plate.

[Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis (fluorosulfonyl)imide, lithium bis (trifluoromethanesulfonyl)imide, lithium trifluoromethanesulfonate, lithium difluorophosphate, lithium difluoro (oxalato)borate, lithium bis (oxalate)borate, lithium difluoro bis (oxalato)phosphate, and lithium tetrafluoro (oxalato)phosphate.

In some embodiments, the solvent can be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, methyl ethyl sulfone and ethylsulfonylethane.

In some embodiments, the electrolyte solution further optionally comprises an additive. For example, the additive may include a negative electrode film-forming additive, or a positive electrode film-forming additive, or may include an additive that capable of improving some performances of the battery, e.g., an additive for improving the overcharge performance of the battery, an additive for improving the high-temperature performance or low-temperature performance of the battery, and the like.

[Separator]

In some embodiments, the secondary battery further includes a separator. The type of the separator is not particularly limited in the present application, and any well-known separator with a porous structure having good chemical stability and mechanical stability may be selected.

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, and there is no particular limitation on it.

In some embodiments, the positive electrode plate, the negative electrode plate and the separator can be made into an electrode assembly by a winding process or a stacking process.

In some embodiments, the secondary battery may include an outer package. The outer package can be used to encapsulate the above-mentioned electrode assembly and electrolyte.

In some embodiments, the outer package of the secondary battery may be a hard case, such as a hard plastic case, an aluminum case, a steel case, and the like. The outer package of the secondary battery may also be a soft package, such as a bag-type soft package. The material of the soft package may be a plastic, and examples of the plastic include polypropylene, polybutylene terephthalate and polybutylene succinate, etc.

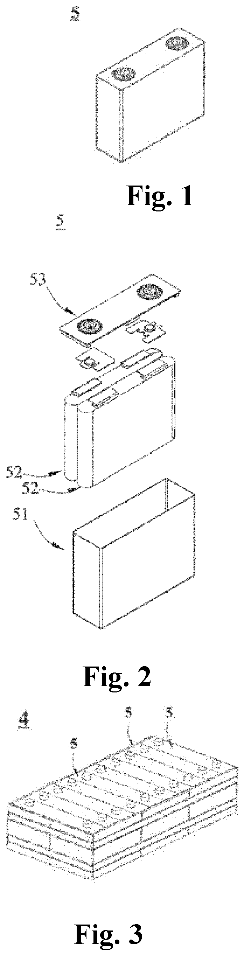

The present application has no particular limitation on the shape of the secondary battery, which can be cylindrical, square or any other shape. For example, Fig. 1 shows a secondary battery 5 with a square structure as an example.

In some embodiments, referring to Fig. 2, the outer package may comprise a case 51 and a cover plate 53. The case 51 may include a bottom plate and a side plate connected to the bottom plate, and the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate and the separator can be subjected to a winding or stacking process to form an electrode assembly 52. The electrode assembly 52 is encapsulated within the accommodating cavity. The electrolyte solution impregnates the electrode assembly 52. The number of the electrode assemblies 52 included in the secondary battery 5 can be one or more, which can be selected by those skilled in the art according to specific practical requirements.

In some embodiments, the secondary batteries can be assembled into a battery module, and the number of the secondary batteries included in the battery module can be one or more, and the specific number can be selected by those skilled in the art according to the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space in which the multiple secondary batteries 5 are accommodated.

In some embodiments, the aforementioned battery module may further be assembled into a battery pack, the number of battery modules contained in the battery pack may be one or more, and the specific number can be selected by those skilled in the art according to the use and capacity of the battery pack.

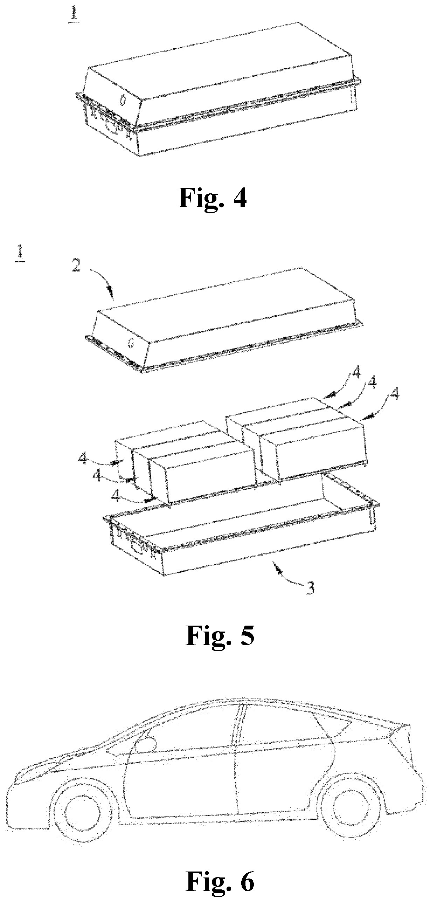

Figs. 4 and 5 show a battery pack 1 as an example. Referring to Figs. 4 and 5, the battery pack 1 may include a battery box and multiple battery modules 4 disposed in the battery box. The battery box includes an upper box body 2 and a lower box body 3, the upper box body 2 can cover the lower box body 3 to form a closed space for accommodating the battery modules 4. The plurality of battery modules 4 may be arranged in the battery box in any manner.

Additionally, the present application further provides an electrical apparatus comprising at least one of the secondary battery, battery module or battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the electrical apparatus, the secondary battery, the battery module, or the battery pack may be selected according to its use requirements.

Fig. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

Embodiments

Embodiments of the present application will be described hereinafter. The following Embodiments are illustrative and only for explaining the present application, and should not be construed as limiting the present application. If no specific technology or condition is indicated in the Embodiments, it shall be carried out according to the technology or condition described in the literature in the art or according to product instructions. Where manufacturers are not specified, the reagents or instruments used are conventional products and are commercially available.

Embodiment 1-1

S1: a nickel-cobalt-manganese mixed metal salt solution with a concentration of 2 mol/L was formulated by using nickel sulfate, cobalt sulfate, manganese sulfate and pure water in a molar ratio of Ni:Co:Mn = 92:6:2, an yttrium salt solution with a concentration of 4 mol/L was formulated by using yttrium sulfate in a molar ratio of Y:Me = 0.2%:1, and a magnesium salt solution with a concentration of 4 mol/L was formulated by using magnesium sulfate in a molar ratio of Mg:Me = 0.1%: 1, wherein Me was the sum of the moles of nickel, cobalt and manganese;

S2: into a 50 L reaction kettle added was 25 L of deionized water as a base liquid, added with 4 mol/L of an ammonia water solution to adjust the ammonia concentration of the base liquid to 0.75 mol/L, and added with a 5 mol/L NaOH solution to adjust the pH value of the base liquid to 10.0; under a nitrogen atmosphere, the base liquid was heated to 75°C, and added with the nickel-cobalt-manganese mixed metal salt solution, the NaOH solution, and the ammonia water solution at a stirring rotational speed of 250 rpm in parallel, and the pH value and ammonia concentration in the reaction kettle were maintained unchanged, when the $Dv_{50}$ reached 7.5 $\mu$m, the addition of the nickel-cobalt-manganese mixed metal salt solution was stopped, the yttrium salt solution and the magnesium salt solution, a NaOH solution, and an ammonia water solution were added into the reaction kettle in parallel, and the pH value and ammonia concentration in the reaction kettle were maintained unchanged until a high-nickel ternary precursor with $Dv_{50}$ = 9 $\mu$m was synthesized, the high-nickel ternary precursor was aged for 3 h, the obtained high-nickel ternary precursor was washed, centrifuged, and dried;

S3: lithium hydroxide and the dried high-nickel ternary precursor were added into a high-speed mixer with a Li/Me molar ratio of 1.03 and mixed at 550 rpm for 0.5 h, and then the mixed material was put into a kiln for sintering at a sintering temperature of 760°C for a sintering time of 20 h under the sintering atmosphere of $O_2$, and subjected to furnace cooling after sintering to obtain a matrix of high-nickel ternary positive electrode material with the molecular formula of $LiNi_{0.92}Co_{0.06}Mg_{0.001}Y_{0.002}Mn_{0.017}O_2$;

S4: the matrix of high-nickel ternary positive electrode material and cobalt boride with a particle size of 50 nm were placed into a high-speed mixer, and mixed at 400 rpm for 0.4 h under a $N_2$ atmosphere, wherein the content of cobalt boride is 5,000 ppm, then the mixture was put into the kiln for sintering at a sintering temperature of 350°C for a sintering time of 10 h under a sintering atmosphere of $N_2$, and subjected to a quenching treatment of rapidly cooling to room temperature with liquid nitrogen after completion of the sintering, so as to obtain the high-nickel ternary positive electrode material.

Embodiment 1-2

The preparation of the high-nickel ternary positive electrode material was generally referred to that in Embodiment 1-1, except that in step S1, a magnesium salt solution with a concentration of 4 mol/L was formulated by adopting magnesium sulfate in a molar ratio of Mg:Me = 0.05%:1; and in step S3, a matrix of high-nickel ternary positive electrode material was obtained, the molecular formula of which was $LiNi_{0.92}Co_{0.06}Mg_{0.0005}Y_{0.002}Mn_{0.0175}O_2$.

Embodiment 1-3

The preparation of the high-nickel ternary positive electrode material was generally referred to that in Embodiment 1-1, except that in step S1, a magnesium salt solution with a concentration of 4 mol/L was formulated by adopting magnesium sulfate in a molar ratio of Mg:Me = 0.3%: 1; and in step S3, a matrix of high-nickel ternary positive electrode material was obtained, the molecular formula of which was $LiNi_{0.92}Co_{0.06}Mg_{0.003}Y_{0.002}Mn_{0.015}O_2$.

Embodiment 1-4

The preparation of the high-nickel ternary positive electrode material was generally referred to that in Embodiment 1-1, except that in step S1, a magnesium salt solution with a concentration of 4 mol/L was formulated by adopting magnesium sulfate in a molar ratio of Mg:Me = 0.5%: 1; and in step S3, a matrix of high-nickel ternary positive electrode material was obtained, the molecular formula of which was $LiNi_{0.92}Co_{0.06}Mg_{0.005}Y_{0.002}Mn_{0.013}O_2$.

Embodiment 1-5

The preparation of the high-nickel ternary positive electrode material was generally referred to that in Embodiment 1-1, except that in step S1, an yttrium salt solution with a concentration of 4 mol/L was formulated by adopting yttrium sulfate in a molar ratio of Y:Me = 0. 1%: 1; and in step S3, a matrix of high-nickel ternary positive electrode material was obtained, the molecular formula of which was $LiNi_{0.92}Co_{0.06}Mg_{0.001}Y_{0.001}Mn_{0.018}O_2$.

Embodiment 1-6

The preparation of the high-nickel ternary positive electrode material was generally referred to that in Embodiment 1-1, except that in step S1, an yttrium salt solution with a concentration of 4 mol/L was formulated by adopting yttrium sulfate in a molar ratio of Y:Me = 0.5%: 1; and in step S3, a matrix of high-nickel ternary positive electrode material was obtained, the molecular formula of which was $LiNi_{0.92}Co_{0.06}Mg_{0.001}Y_{0.005}Mn_{0.014}O_2$.

Embodiment 1-7

The preparation of the high-nickel ternary positive electrode material was generally referred to that in Embodiment 1-1, except that in step S1, an yttrium salt solution with a concentration of 4 mol/L was formulated by adopting yttrium sulfate in a molar ratio of Y:Me = 1%: 1; and in step S3, a matrix of high-nickel ternary positive electrode material was obtained, the molecular formula of which was $LiNi_{0.92}C_{0.06}Mg_{0.001}Y_{0.01}Mn_{0.009}O_2$.

Embodiment 1-8

The preparation of the high-nickel ternary positive electrode material was generally referred to that in Embodiment 1-1, except that in step S1, manganese sulfate was replaced with aluminum sulfate; and in step S3, a matrix of high-nickel ternary positive electrode material was obtained, the molecular formula of which was $LiNi_{0.92}Co_{0.06}Mg_{0.001}Y_{0.002}Al_{0.017}O_2$.

Comparative Embodiment 1-1

S1: a nickel-cobalt-manganese mixed metal salt solution with a concentration of 2 mol/L was formulated by using nickel sulfate, cobalt sulfate, manganese sulfate and pure water in a molar ratio of Ni:Co:Mn = 92:6:2;
S2: into a 50 L reaction kettle added was 25 L of deionized water as a base liquid, added with 4 mol/L of an ammonia water solution to adjust the ammonia concentration of the base liquid to 0.75 mol/L, and added with a 5 mol/L NaOH solution to adjust the pH value of the base liquid to 10.0; under a nitrogen atmosphere, the base liquid was heated to 75°C, and added with the nickel-cobalt-manganese mixed metal salt solution, the NaOH solution, and the ammonia water solution at a stirring rotational speed of 250 rpm in parallel, and the pH value and ammonia concentration in the reaction kettle were maintained unchanged until a high-nickel ternary precursor with $Dv_{50} = 9 \mu m$ was synthesized,

the high-nickel ternary precursor was aged for 3 h, the obtained high-nickel ternary precursor was washed, centrifuged, and dried;

S3: lithium hydroxide and the dried high-nickel ternary precursor were added into a high-speed mixer with a Li/Me molar ratio of 1.01 and mixed at 550 rpm for 0.5 h, and then the mixed material was put into a kiln for sintering at a sintering temperature of 800°C for a sintering time of 20 h under the sintering atmosphere of $O_2$, and subjected to furnace cooling after sintering to obtain a high-nickel ternary positive electrode material $LiNi_{0.92}Co_{0.06}Mn_{0.02}O_2$.

Comparative Embodiment 1-2

The preparation of the high-nickel ternary positive electrode material was generally referred to that in Embodiment 1-1, except that the magnesium salt solution was not added; and in step S3, a matrix of high-nickel ternary positive electrode material was obtained, the molecular formula of which was $LiNi_{0.92}Co_{0.06}Y_{0.002}Mn_{0.018}O_2$.

Comparative Embodiment 1-3

The preparation of the high-nickel ternary positive electrode material was generally referred to that in Embodiment 1-1, except that the yttrium salt solution was not added; and in step S3, a matrix of high-nickel ternary positive electrode material was obtained, the molecular formula of which was $LiNi_{0.92}Co_{0.06}Mg_{0.001}Mn_{0.019}O_2$.

Comparative Embodiment 1-4

The preparation of the high-nickel ternary positive electrode material was generally referred to that in Embodiment 1-1, except that in step S1, a magnesium salt solution with a concentration of 4 mol/L was formulated by adopting magnesium sulfate in a molar ratio of Mg:Me = 0.6%: 1; in step S2, the yttrium salt solution was not added; and in step S3, a matrix of high-nickel ternary positive electrode material was obtained, the molecular formula of which was $LiNi_{0.92}Co_{0.06}Mg_{0.006}Mn_{0.014}O_2$.

Comparative Embodiment 1-5

The preparation of the high-nickel ternary positive electrode material was generally referred to that in Embodiment 1-1, except that in step S1, an yttrium salt solution with a concentration of 4 mol/L was formulated by adopting yttrium sulfate in a molar ratio of Y:Me = 1.5%: 1; in step S2, the magnesium salt solution was not added; and in step S3, a matrix of high-nickel ternary positive electrode material was obtained, the molecular formula of which was $LiNi_{0.92}Co_{0.06}Y_{0.015}Mn_{0.005}O_2$.

Embodiment 2-1

The preparation of the high-nickel ternary positive electrode material was generally referred to that in Embodiment 1-1, except that in step S4, the content of cobalt boride was 1,000 ppm.

Embodiment 2-2

The preparation of the high-nickel ternary positive electrode material was generally referred to that in Embodiment 1-1, except that in step S4, the content of cobalt boride was 10000 ppm.

Embodiment 2-3

The preparation of the high-nickel ternary positive electrode material was generally referred to that in Embodiment 1-1, except that in step S4, the content of cobalt boride was 15000 ppm.

Embodiment 2-4

The preparation of the high-nickel ternary positive electrode material was generally referred to that in Embodiment 1-1, except that in step S4, the content of cobalt boride was 500 ppm.

Embodiment 2-5

The preparation of the high-nickel ternary positive electrode material was generally referred to that in Embodiment 1-1, except that in step S4, the content of cobalt boride was 16000 ppm.

Embodiment 3-1

The preparation of the high-nickel ternary positive electrode material was generally referred to that in Embodiment 1-1, except that in step S4, the sintering temperature was 300°C.

Embodiment 3-2

The preparation of the high-nickel ternary positive electrode material was generally referred to that in Embodiment 1-1, except that in step S4, the sintering temperature was 650°C.

Embodiment 3-3

The preparation of the high-nickel ternary positive electrode material was generally referred to that in Embodiment 1-1, except that in step S4, the sintering temperature was 200°C.

Embodiment 3-4

The preparation of the high-nickel ternary positive electrode material was generally referred to that in Embodiment 1-1, except that in step S4, the sintering temperature was 700°C.

Embodiment 4-1

The preparation of the high-nickel ternary positive electrode material was generally referred to that in Embodiment 1-1, except that in step S4, the sintering time was 3 h.

Embodiment 4-2

The preparation of the high-nickel ternary positive electrode material was generally referred to that in Embodiment 1-1, except that in step S4, the sintering time was 7 h.

Embodiment 4-3

The preparation of the high-nickel ternary positive electrode material was generally referred to that in Embodiment 1-1, except that in step S4, the sintering time was 2 h.

Embodiment 4-4

The preparation of the high-nickel ternary positive electrode material was generally referred to that in Embodiment 1-1, except that in step S4, the sintering time was 11 h.

Embodiment 5-1

The preparation of the high-nickel ternary positive electrode material was generally referred to that in Embodiment 1-1, except that in step S4, the particle size of cobalt boride was 500 nm.

Embodiment 5-2

The preparation of the high-nickel ternary positive electrode material was generally referred to that in Embodiment 1-1, except that in step S4, the particle size of cobalt boride was 2000 nm.

Embodiment 5-3

The preparation of the high-nickel ternary positive electrode material was generally referred to that in Embodiment 1-1, except that in step S4, the particle size of cobalt boride was 3200 nm.

Embodiment 5-4

The preparation of the high-nickel ternary positive electrode material was generally referred to that in Embodiment 1-1, except that in step S4, cobalt boride was replaced by titanium boride.

Embodiment 5-5

The preparation of the high-nickel ternary positive electrode material was generally referred to that in Embodiment 1-1, except that in step S4, the particle size of cobalt boride was 3300 nm.

Embodiment 5-6

The preparation of the high-nickel ternary positive electrode material was generally referred to that in Embodiment 1-1, except that in step S4, the sintering atmosphere was oxygen, the sintering temperature was 650°C, and the sintering time was 7 h.

Testing Method

1. Determination of the matrix of high-nickel ternary positive electrode material

An inductively coupled plasma optical emission spectroscopy (ICP-OES) with the device model of ICAP7400 from Thermo Fisher Scientific, USA, was adopted. First 1 g of a sample was weighed into a beaker, added with 25 ml of a $HNO_3$ solution with a concentration of 25% by volume for dissolving the sample, and diluted with 475 ml of deionized water. Then the diluted liquid was put into the instrument and equipment to conduct target element analysis, so as to obtain the target element content through calculation.

2. Volume distribution particle size

The method for testing the volume distribution particle size was: determining with reference to GB/T 19077-2016/ISO 13320:2009 particle size distribution laser diffraction method and using the device Malvern 3000. A clean beaker was taken, added with an appropriate amount of the sample to be tested until the shading degree was 8%-12%, added with 20 ml of deionized water and meanwhile subjected to external ultrasound for 5 min, and a particle size tester was turned on to start testing.

3. Specific surface area BET

A method for testing the specific surface area BET of the ternary precursor was: determining with reference to GB/T 19587-2017 "Determination of the specific surface area of solids by gas adsorption using the BET method", and using the device TriStar II 3020. A special sample tube for crystallization was taken, added with the sample to be tested with a sampling spoon in an addition amount at 2/3 of the bulb. The outside of the tube was wiped with dust-free paper after taking. Then the sample tube was loaded onto a device degassing station to degas the sample tube, and finally the sample was put into an analysis station for sample analysis.

4. Tap density TD

A method for testing the tap density TD of the ternary precursor was: determining with reference to GB/T 5162-2006 "Metallic powders-Determination of tap density", and using a tap density meter as the testing device. A clean and dry 100 ml graduated cylinder was weighed as $m_0$ g, then charged with a certain amount of a powder sample, and weighed at a total weight of $m_1$ g. The graduated cylinder containing the powder was put onto the tap density meter, and the device was turned on with the set number of vibrations of 5,000, the volume was read as V cm$^3$ after the vibration, the tap density = $(m_1 - m_0)/V$, and the unit was g/cm$^3$.

5. Degree of material cracking after cycling

An image method was utilized to output the percentage of particle cracking: a battery plate which had been subjected to 500 cycles at 45°C was taken out. A flat fracture surface of the battery plate was obtained by ion polishing. The particle distribution of the sample was observed through a scanning electron microscope (referred to as SEM for short) and target particles with obvious grayscale differences and high resolutions were selected. The percentage of single particle cracking was obtained by adjusting the threshold value with imageJ software. The information of 30 particles was collected and averaged to obtain an average value as the degree of material cracking after cycling of this sample.

6. Preparation of full battery:

The high-nickel ternary positive electrode materials prepared in the aforementioned Embodiments and comparative Embodiments were used as positive electrode active materials, which were fully stirred and uniformly mixed with the conductive agent acetylene black and the binder polyvinylidene fluoride (PVDF) according to the weight ratio of 94:3:3 in an N-methylpyrrolidone solvent system, and then coated onto a aluminum foil, oven-dried and cold pressed to obtain the positive electrode plate. The negative electrode active materials artificial graphite, hard carbon, the conductive agent acetylene black, the binder styrene butadiene rubber (SBR) and the thickener sodium carboxymethyl cellulose (CMC) were fully stirred and uniformly mixed in a deionized water solvent system according to the weight ratio of 90:5:2:2:1, and then coated onto a copper foil, oven-dried and cold pressed to obtain the negative electrode plate. A polyethylene porous polymer film was used as the separator. The positive electrode plate, separator and negative electrode plate were stacked in sequence, so that the separator was placed between the positive electrode plate and the negative electrode plate to play a role of isolation, and then they were wound to obtain a bare battery cell. The bare battery cell was placed in an outer package, injected with the formulated basic electrolyte solution, i.e., 1 mol/L of $LiPF_6$/(EC + EMC + DMC) (with a volume ratio of 1:1:1), and encapsulated to obtain the full battery.

Method for testing initial gram capacity of full battery:

In a constant-temperature environment of 25°C, the battery was allowed to stand for 5 min, discharged to 2.8 V according to 1/3C, allowed to stand for 5 min, charged to 4.25 V according to 1/3C, then charged at a constant voltage of 4.25 V until the current $\leq$ 0.05 mA, and allowed to stand for 5 min. The charging capacity at this time was recorded as $C_0$, and then the battery was discharged to 2.8 V according to 1/3C, and the discharging capacity at this time was the initial gram capacity, which was recorded as $D_0$.

Testing of cycling capacity performance at 45°C:

In a constant-temperature environment of 45°C, at 2.8-4.25 V, the battery was charged to 4.25 V according to 1C, then charged at a constant voltage of 4.25 V until the current was $\leq$ 0.05 mA, allowed to stand for 5 min, and then discharged to 2.8 V according to 1C, and the capacity was recorded as $D_0$. The aforementioned process was repeated and the capacity $D_n$ (n = 0, 1, 2...) was recorded. The cycling capacity retention rate of 500 cycles was calculated:

$$D_{500}/D_0 * 100\%.$$

Storage capacity retention rate (%) at 60°C:

In a constant-temperature environment of 25°C, a complete gram capacity test was conducted (referring to "Method for testing initial gram capacity of full battery"), the capacity was recorded as $D_0$, and then the battery was charged to 4.25 V at a constant current from 0.33C and charged at a constant voltage until the current $\leq$ 0.05 mA, allowed to stand for 5 min, then put in a high-low temperature chamber at 60°C, allowed to stand for 1 h, and stored after the battery temperature reached the target temperature. The battery was taken out after 15 days, the previous process was repeated in a constant-temperature environment of 25°C, the capacity $D_n$ (n = 0, 1, 2...) was recorded every 15 days, and the capacity retention rate after 105 days of storage was calculated: $D_7/D_0 * 100\%$.

The aforementioned embodiments and comparative embodiments were tested respectively according to the aforementioned processes, and the specific values were shown in Tables 1-5.

Table 1: The effect of the doping content of the Mg element and the Y element in the matrix on the battery performance

| Embodiments | Mg doping content (Mg:Me) | Y doping content (Y: Me) | Matrix | Relevant parameters of high-nickel ternary positive electrode material | | | | Battery performance | | | |
|---|---|---|---|---|---|---|---|---|---|---|---|
| | | | | $Dv_{50}$ ($\mu$m) | $(Dv_{90}-DV_{10})$ $/DV_{50}$ | Specific surface area ($m^2/g$) | Tap density ($g/cm^3$) | Capacity of full battery at 1/3C (mAh/g) | cycling capacity retention rate (%) at 45°C | Storage capacity retention rate (%) at 60°C | Degree of material cracking after cycling (%) |
| Embodiment 1-1 | 0.001 | 0.002 | $LiNi_{0.92}Co_{0.06}Mg_{0.001}Y_{0.002}Mn_{0.017}O_2$ | 9 | 1.35 | 0.55 | 2 | 214.0 | 92.0 | 93.4 | 3.65 |
| Embodiment 1-2 | 0.0005 | 0.002 | $LiNi_{0.92}Co_{0.06}Mg_{0.0005}Y_{0.002}Mn_{0.0175}O_2$ | 9 | 1.35 | 0.55 | 2 | 214.5 | 91.0 | 93.0 | 3.87 |
| Embodiment 1-3 | 0.003 | 0.002 | $LiNi_{0.92}Co_{0.06}Mg_{0.003}Y_{0.002}Mn_{0.015}O_2$ | 9 | 1.35 | 0.55 | 2 | 212.5 | 92.8 | 93.8 | 3.41 |
| Embodiment 1-4 | 0.005 | 0.002 | $LiNi_{0.92}Co_{0.06}Mg_{0.005}Y_{0.002}Mn_{0.013}O_2$ | 9 | 1.42 | 0.55 | 2 | 211.5 | 93.7 | 94.4 | 3.08 |
| Embodiment 1-5 | 0.001 | 0.001 | $LiNi_{0.92}Co_{0.06}Mg_{0.001}Y_{0.001}Mn_{0.018}O_2$ | 9 | 1.35 | 0.55 | 2 | 214.0 | 90.7 | 92.8 | 4.06 |
| Embodiment 1-6 | 0.001 | 0.005 | $LiNi_{0.92}Co_{0.06}Mg_{0.001}Y_{0.005}Mn_{0.014}O_2$ | 9 | 1.35 | 0.55 | 2 | 213.5 | 93.5 | 94.2 | 3.03 |
| Embodiment 1-7 | 0.001 | 0.01 | $LiNi_{0.92}Co_{0.06}Mg_{0.001}Y_{0.01}Mn_{0.009}O_2$ | 9 | 1.30 | 0.55 | 2 | 212.0 | 93.9 | 94.7 | 2.58 |
| Embodiment 1-8 | 0.001 | 0.002 | $LiNi_{0.92}Co_{0.06}Mg_{0.001}Y_{0.002}Al_{0.017}O_2$ | 9 | 1.51 | 0.55 | 2 | 212.5 | 92.3 | 92.9 | 3.58 |

| Embodiments | Mg doping content (Mg:Me) | Y doping content (Y: Me) | Matrix | Relevant parameters of high-nickel ternary positive electrode material | | | | Battery performance | | | |
|---|---|---|---|---|---|---|---|---|---|---|---|
| | | | | $Dv_{50}$ ($\mu$m) | $(Dv_{90}-DV_{10})/DV_{50}$ | Specific surface area ($m^2$/g) | Tap density (g/$cm^3$) | Capacity of full battery at 1/3C (mAh/g) | cycling capacity retention rate (%) at 45°C | Storage capacity retention rate (%) at 60°C | Degree of material cracking after cycling (%) |
| Comparative Embodiment 1-1 | / | / | $LiNi_{0.92}Co_{0.06}Mn_{0.02}O_2$ | 9 | 1.35 | 0.55 | 2 | 215.0 | 83.7 | 87.5 | 10.72 |
| Comparative Embodiment 1-2 | / | 0.002 | $LiNi_{0.92}Co_{0.06}Y_{0.002}Mn_{0.018}O2$ | 9 | 1.35 | 0.55 | 2 | 214.5 | 85.0 | 88.2 | 10.42 |
| Comparative Embodiment 1-3 | 0.001 | / | $LiNi_{0.92}Co_{0.06}Mg_{0.001}Mn_{0.019}O_2$ | 9 | 1.35 | 0.55 | 2 | 213.5 | 85.3 | 88.0 | 10.36 |
| Comparative Embodiment 1-4 | 0.006 | / | $LiNi_{0.92}Co_{0.06}Mg_{0.006}Mn_{0.014}O_2$ | 9 | 1.35 | 0.55 | 2 | 210.0 | 88.5 | 89.1 | 9.13 |
| Comparative Embodiment 1-5 | / | 0.015 | $LiNi_{0.92}Co_{0.06}Y_{0.015}Mn_{0.005}O2$ | 9 | 1.35 | 0.55 | 2 | 211.0 | 86.1 | 90.0 | 9.77 |
| Note: Me referred to the sum of the moles of nickel, cobalt and manganese | | | | | | | | | | | |

EP 4 276 945 A1

Table 2: Effect of the cladding content of the boron-containing alloy on battery performance

| Embodiments | Cladding content (ppm) | Relevant parameters of high-nickel ternary positive electrode material | | | | Battery performance | | | |
|---|---|---|---|---|---|---|---|---|---|
| | | $Dv_{50}$ | $(Dv_{90}-DV_{10})/DV_{50}$ | Specific surface area (m²/g) | Tap density (g/cm³) | Capacity of full battery at 1/3C (mAh/g) | Cycling capacity retention rate (%) at 45°C | Storage capacity retention rate (%) at 60°C | Degree of material cracking after cycling (%) |
| Embodiment 1-1 | 5000 | 9 | 1.35 | 0.55 | 2 | 214.0 | 92.0 | 93.4 | 3.65 |
| Embodiment 2-1 | 1000 | 9 | 1.35 | 0.55 | 2 | 214.5 | 91.5 | 92.9 | 4.42 |
| Embodiment 2-2 | 10000 | 9 | 1.35 | 0.55 | 2 | 213.0 | 93.0 | 94.0 | 2.91 |
| Embodiment 2-3 | 15000 | 9 | 1.35 | 0.55 | 2 | 212.5 | 94.3 | 94.5 | 2.17 |
| Embodiment 2-4 | 500 | 9 | 1.35 | 0.55 | 2 | 215.0 | 90.6 | 92.2 | 4.93 |
| Embodiment 2-5 | 16000 | 9 | 1.35 | 0.55 | 2 | 211.0 | 94.7 | 94.8 | 1.86 |

Table 3: Effect of the sintering temperature in step S4 on the battery performance

| Embodiments | Sintering temperature in step S4 (°C) | Relevant parameters of high-nickel ternary positive electrode material | | | | Battery performance | | | |
|---|---|---|---|---|---|---|---|---|---|
| | | $Dv_{50}$ | $(DV_{90}-DV_{10})/DV_{50}$ | Specific surface area (m$^2$/g) | Tap density (g/cm$^3$) | Capacity of full battery at 1/3C (mAh/g) | Cycling capacity retention rate (%) at 45°C | Storage capacity retention rate (%) at 60°C | Degree of material cracking after cycling (%) |
| Embodiment 1-1 | 350 | 9 | 1.35 | 0.55 | 2 | 214.0 | 92.0 | 93.4 | 3.65 |
| Embodiment 3-1 | 300 | 9 | 1.35 | 0.57 | 2 | 214.0 | 91.8 | 93.2 | 3.88 |
| Embodiment 3-2 | 650 | 9 | 1.35 | 0.48 | 2 | 212.5 | 92.6 | 93.7 | 3.11 |
| Embodiment 3-3 | 200 | 9 | 1.35 | 0.53 | 2 | 211.0 | 88.6 | 90.5 | 8.21 |
| Embodiment 3-4 | 700 | 9 | 1.35 | 0.45 | 2 | 211.5 | 89.1 | 91.2 | 7.76 |

Table 4: Effect of the sintering time in step S4 on the battery performance

| Embodiments | Sintering time in | | Relevant parameters of high-nickel ternary positive electrode material | | | Battery performance | | | |
|---|---|---|---|---|---|---|---|---|---|
| | step S4 (h) | $Dv_{50}$ | $(DV_{90}-DV_{10})/DV_{50}$ | Specific surface area (m$^2$/g) | Tap density (g/cm$^3$) | Capacity of full battery at 1/3C (mAh/g) | cycling capacity retention rate (%) at 45°C | Storagecapacity retention rate (%) at 60°C | Degree of material cracking after cycling (%) |
| Embodiment 1-1 | 10 | 9 | 1.35 | 0.55 | 2 | 214.0 | 92.0 | 93.4 | 3.65 |
| Embodiment 4-1 | 3 | 9 | 1.35 | 0.52 | 2 | 213.5 | 91.7 | 93.1 | 3.80 |
| Embodiment 4-2 | 7 | 9 | 1.35 | 0.54 | 2 | 213.5 | 91.9 | 93.3 | 3.72 |
| Embodiment 4-3 | 2 | 9 | 1.35 | 0.52 | 2 | 212.5 | 90.9 | 91.8 | 4.87 |
| Embodiment 4-4 | 11 | 9 | 1.35 | 0.5 | 2 | 212.0 | 90.6 | 91.6 | 5.03 |

Table 5: Effect of other parameters on the battery performance

| Embodiments | Boroncontaining alloy | Particle size (nm) | Atmosphere in step S4 | Relevant parameters of high-nickel ternary positive electrode material | | | | Battery performance | | | |
|---|---|---|---|---|---|---|---|---|---|---|---|
| | | | | $Dv_{50}$ | $(Dv_{90}-Dv_{10})/Dv_{50}$ | Specific surface area $(m^2/g)$ | Tap density $(g/cm^3)$ | Capacity of full battery at 1/3C (mAh/g) | cycling capacity retention rate (%) at 45°C | Storage capacity retention rate (%) at 60°C | Degree of material cracking after cycling (%) |
| Embodiment 1-1 | Cobalt boride | 50 | Nitrogen | 9 | 1.35 | 0.55 | 2 | 214.0 | 92.0 | 93.4 | 3.65 |
| Embodiment 5-1 | Cobalt boride | 500 | Nitrogen | 9 | 1.35 | 0.52 | 2 | 212.5 | 91.6 | 93.1 | 3.71 |
| Embodiment 5-2 | Cobalt boride | 2000 | Nitrogen | 9 | 1.35 | 0.48 | 2 | 211.0 | 91.2 | 92.7 | 3.82 |
| Embodiment 5-3 | Cobalt boride | 3200 | Nitrogen | 9 | 1.35 | 0.40 | 2 | 209.5 | 90.7 | 92.3 | 4.01 |
| Embodiment 5-4 | Titanium boride | 50 | Nitrogen | 9 | 1.35 | 0.48 | 2 | 211.5 | 90.7 | 92.3 | 4.01 |
| Embodiment 5-5 | Cobalt boride | 3300 | Nitrogen | 9 | 1.35 | 0.35 | 2 | 208.5 | 89.8 | 90.9 | 6.43 |
| Embodiment 5-6 | Cobalt boride | 50 | Oxygen | 9 | 1.35 | 0.59 | 2 | 215.0 | 93.5 | 91.8 | 3.10 |

It could be seen from Tables 1 to 5 that the cycling capacity retention rates at 45°C and storage capacity retention rates at 60°C of the secondary batteries of all the aforementioned embodiments were higher than those of the secondary batteries of the comparative embodiments. Furthermore, the degree of material cracking after cycling of all the secondary batteries of the embodiments was significantly reduced. This showed that by uniformly distributing the Y element and the Mg element in the outer particles of the material powder and cladding the particles, the cycling capacity retention rate at 45°C, storage capacity retention rate at 60°C and degree of material cracking after cycling of the secondary battery could be significantly improved.

In comprehensive comparison of Embodiments 1-1 to 1-8 and Comparative Embodiments 1-1 to 1-5, when $0 < c \leq 0.005$ and $0 < d \leq 0.01$, the cycling capacity retention rate at 45°C, storage capacity retention rate at 60°C and degree of material cracking after cycling of the secondary battery could be significantly improved. Since too much doping of the Mg element or the Y element would reduce the energy density of the secondary battery, thereby affecting the capacity of the secondary battery, it was preferred that $0 < c \leq 0.003$, and $0 < d \leq 0.005$.

In comprehensive comparison of Embodiment 1-1 and Embodiments 2-1 to 2-5, as the cladding content of the boron-containing alloy increases, the cycling capacity retention rate at 45°C and storage capacity retention rate at 60°C of the battery were increased, while the degree of material cracking after cycling of the battery was decreased; however, if the cladding content of the boron-containing alloy was too high, the energy density of the secondary battery would be reduced, which in turn reduced the capacity of the secondary battery. Therefore, when the cladding content of the boron-containing alloy was preferably 1,000-15,000 ppm, the cycling capacity retention rate at 45°C and storage capacity retention rate at 60°C of the battery could be further improved, as well as the degree of material cracking after cycling, while the capacity of the secondary battery was less affected.

In comprehensive comparison of Embodiment 1-1 and Embodiments 3-1 to 3-4, when the sintering temperature in step S4 was 300-650°C, the cycling capacity retention rate at 45°C and storage capacity retention rate at 60°C of the secondary battery were increased, and the degree of material cracking after cycling was good. In comprehensive comparison of Embodiment 1-1 and Embodiments 4-1 to 4-4, when the sintering time in step S4 was 3 h-10 h, the cycling capacity retention rate at 45°C and storage capacity retention rate at 60°C of the secondary battery were increased, and the degree of material cracking after cycling was good.

In comprehensive comparison of Embodiment 1-1 and Embodiments 5-1 to 5-5, when the particle size of the boron-containing alloy was 50-3,200 nm, the cycling capacity retention rate at 45°C, storage capacity retention rate at 60°C, and degree of material cracking after cycling of the secondary battery could be significantly improved. Furthermore, In comprehensive comparison of Embodiments 1-1 and Embodiment 5-6, step S4 of the preparation method of the present application could be compatible with both schemes of sintering under a low-temperature inert atmosphere and sintering under a high-temperature oxygen atmosphere. The secondary batteries including the high-nickel ternary positive electrode materials prepared by the two schemes has a high cycling capacity retention rate at 45°C and a high storage capacity retention rate at 60°C, and meanwhile a low degree of material cracking after cycling.

It should be noted that the present application is not limited to the aforementioned embodiments. The above embodiments are merely exemplary, and embodiments having substantially the same technical idea and the same effects within the scope of the technical solutions of the present application are all included in the technical scope of the present application. Furthermore, without departing from the scope of the subject matter of the present application, various modifications that can come into the mind of those skilled in the art applied to the embodiments and other embodiments constructed by combining partial composition elements of the embodiments are also included in the scope of the present application.

**Claims**

1. A high-nickel ternary positive electrode material, comprising
   a matrix $Li_{1+x}Ni_aCo_bMg_cY_dM_{(1-a-b-c-d)}O_{2\pm y}$, wherein M is selected from at least one of Mn, Zr, Al, B, Ta, Mo, W, Nb, Sb, and La, wherein: $0.8 \leq a < 1.0$, $0 < b < 0.2$, $0 < c \leq 0.005$, $0 < d \leq 0.01$, $a + b + c + d < 1$, $-0.5 < x < 0.5$, $0 \leq y < 0.02$, a surface of the matrix is provided with a cladding layer, and the cladding layer contains a boron-containing alloy.

2. The high-nickel ternary positive electrode material according to claim 1, wherein the boron-containing alloy is $M'B_z$, wherein M' is selected from at least one of Co, Ti, Zr, W, Al and Mo, and $0 < z \leq 4$.

3. The high-nickel ternary positive electrode material according to claim 1 or 2, wherein $0 < c \leq 0.003$.

4. The high-nickel ternary positive electrode material according to any of claims 1 to 3, wherein $0 < d \leq 0.005$.

5. The high-nickel ternary positive electrode material according to any of claims 1 to 4, wherein the cladding content of the boron-containing alloy is 1,000 ppm-15,000 ppm, based on the total weight of the metal elements in the boron-containing alloy relative to the matrix.

6. The high-nickel ternary positive electrode material according to any of claims 1 to 5, wherein the high-nickel ternary positive electrode material has a particle diameter $Dv_{50}$ of 3 $\mu$m-18 $\mu$m, and optionally 9 $\mu$m-14 $\mu$m, and a volume distribution span $(Dv_{90} - Dv_{10})/Dv_{50} \geq 1.30$.

7. The high-nickel ternary positive electrode material according to any of claims 1 to 6, wherein the BET of the high-nickel ternary positive electrode material is 0.2 $m^2$/g-1 $m^2$/g, and optionally 0.3 $m^2$/g-0.7 $m^2$/g.

8. The high-nickel ternary positive electrode material according to any of claims 1 to 7, wherein the tap density TD of the high-nickel ternary positive electrode material is 1.8 $g/cm^3$-2.5 $g/cm^3$, and optionally 1.9 $g/cm^3$-2.3 $g/cm^3$.

9. A method for preparing a high-nickel ternary positive electrode material, comprising the following steps:

S1: preparing a mixed metal salt solution of Ni, Co and M, as well as a magnesium salt solution and an yttrium salt solution;
S2: adding water into a reaction kettle as a base liquid, adding an alkali solution and ammonia water to adjust the pH value and ammonia concentration of the base liquid, adding the mixed metal salt solution of Ni, Co and M, the alkali solution and ammonia water into the reaction kettle, keeping the pH value and ammonia concentration be constant and feeding an inert gas for protection, so as to obtain a high-nickel ternary precursor, stopping the addition of the mixed metal salt solution of Ni, Co and M, adding the magnesium salt solution, the yttrium salt solution, the alkali solution, and ammonia water into the reaction kettle, and keeping the pH value and ammonia concentration be constant, so as to obtain a high-nickel ternary precursor doped with the Mg and Y elements on the surface;
S3: mixing and sintering a lithium-containing compound and the high-nickel ternary precursor doped with the Mg and Y elements on the surface to obtain a matrix of high-nickel ternary positive electrode material; and
S4: mixing the matrix of high-nickel ternary positive electrode material with a boron-containing alloy in an inert atmosphere or air, and then sintering in an inert atmosphere or $O_2$ to obtain the high-nickel ternary positive electrode material;
wherein, the high-nickel ternary positive electrode material comprises:
a matrix $Li_{1+x}Ni_aCo_bMg_cY_dM_{(1-a-b-c-d)}O_{2\pm y}$, wherein M is selected from at least one of Mn, Zr, Al, B, Ta, Mo, W, Nb, Sb, and La, wherein: $0.8 \leq a < 1.0$, $0 < b < 0.2$, $0 < c \leq 0.005$, $0 < d \leq 0.01$, $a + b + c + d < 1$, $-0.5 < x < 0.5$, $0 \leq y < 0.02$, a surface of the matrix is provided with a cladding layer, and the cladding layer contains a boron-containing alloy.

10. The method according to claim 9, wherein in step S4, the inert atmosphere is nitrogen ($N_2$) or argon (Ar) with a purity of 99.9% or higher .

11. The method according to claim 9 or 10, wherein in step S4, the sintering temperature is 300°C-650°C.

12. The method according to any of claims 9 to 11, wherein in step S4, the sintering time is 3 h-10 h.

13. The method according to any of claims 9 to 12, wherein in step S4, the particle size of the boron-containing alloy is 50 nm-3,200 nm.

14. A secondary battery comprising the high-nickel ternary positive electrode material of any of claims 1 to 8 or the high-nickel ternary positive electrode material prepared by the method of any of claims 9 to 13.

15. A battery module comprising the secondary batteryof claim 14.

16. A battery pack comprising the battery moduleof claim 15.

17. An electrical apparatus comprising at least one selected from the secondary battery of claim 14, the battery moduleof claim 15 or the battery pack of claim 16.

**5**

**Fig. 1**

**5**

**Fig. 2**

**Fig. 3**

1

**Fig. 4**

1  2

4  4  4

4  4

4

3

**Fig. 5**

**Fig. 6**

## INTERNATIONAL SEARCH REPORT

| | International application No. |
|---|---|
| | **PCT/CN2022/081676** |

**A.  CLASSIFICATION OF SUBJECT MATTER**

H01M 4/36(2006.01)i;  H01M 4/525(2010.01)i

According to International Patent Classification (IPC) or to both national classification and IPC

**B.  FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 正极, 材料, 三元, Mg, Y, 表面, 包覆, 镁, 钇, 硼合金, 硼化钴, battery, cathode, material, nickel, manganese, yttrium, coat+, cobalt, boride

**C.  DOCUMENTS CONSIDERED TO BE RELEVANT**

| Category* | Citation of document, with indication, where appropriate, of the relevant passages | Relevant to claim No. |
|---|---|---|
| Y | CN 106532005 A (GUIZHOU ZHENHUA NEW MATERIAL CO., LTD. et al.) 22 March 2017 (2017-03-22)<br>description, paragraphs 7-89, and claims 21-23 | 1-8, 14-17 |
| Y | CN 113328077 A (SVOLT ENERGY TECHNOLOGY CO., LTD.) 31 August 2021 (2021-08-31)<br>description, paragraphs 8-38 | 1-8, 14-17 |
| Y | CN 114122377 A (TIANJIN B&M SCIENCE AND TECHNOLOGY CO., LTD.) 01 March 2022 (2022-03-01)<br>description, paragraphs 33-45 | 1-8, 14-17 |
| A | US 2021119209 A1 (CONTEMPORARY AMPEREX TECHNOLOGY CO., LIMITED) 22 April 2021 (2021-04-22)<br>entire document | 1-17 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2022** | **30 November 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/081676**

| Patent document cited in search report | | | Publication date (day/month/year) | Patent family member(s) | | | Publication date (day/month/year) |
|---|---|---|---|---|---|---|---|
| CN | 106532005 | A | 22 March 2017 | EP | 3336062 | A1 | 20 June 2018 |
| | | | | KR | 20180070435 | A | 26 June 2018 |
| | | | | JP | 2018098173 | A | 21 June 2018 |
| | | | | US | 2018175368 | A1 | 21 June 2018 |
| | | | | KR | 20190035670 | A | 03 April 2019 |
| | | | | US | 2020161633 | A1 | 21 May 2020 |
| CN | 113328077 | A | 31 August 2021 | | None | | |
| CN | 114122377 | A | 01 March 2022 | | None | | |
| US | 2021119209 | A1 | 22 April 2021 | EP | 3793008 | A1 | 17 March 2021 |
| | | | | WO | 2020134780 | A1 | 02 July 2020 |
| | | | | CN | 111384377 | A | 07 July 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 195872017 T
- GB 51622006 T

- GB 190772016 T